# EUROPÄISCHE PATENTSCHRIFT

(11) **EP 2 699 607 B1**
(45) Veröffentlichungstag und Bekanntmachung des Hinweises auf die Patenterteilung: **18.03.2015**
(21) Anmeldenummer: 12714014.3
(22) Anmeldetag: 17.04.2012
(51) Int. Cl.: C08F 36/18, C08C 1/15, C08L 11/00

(54) **POLYCHLOROPREN-FESTSTOFF MIT THIXOTROPEN EIGENSCHAFTEN**
POLYCHLOROPRENE SOLID WITH IMPROVED PROCESSING
MATIÈRE SOLIDE EN POLYCHLOROPRÈNE AYANT UNE POSSIBILITÉ DE TRAITEMENT AMÉLIORÉE

(30) Priorität: 21.04.2011 EP 11163557
(43) Veröffentlichungstag der Anmeldung: 26.02.2014
(73) Patentinhaber: LANXESS Deutschland GmbH, 50569 Köln (DE)
(72) Erfinder: NEUNER, Thomas-Oliver, 40721 Hilden (DE); STANGE, Heiner, 51379 Leverkusen (DE); JOSTEN, Rolf, 41469 Neuss (DE); FELLER, Rolf, 40822 Mettmann (DE); FIDAN, Mesut, 41539 Dormagen (DE)
(86) Internationale Anmeldenummer: PCT/EP2012/056958
(87) Internationale Veröffentlichungsnummer: WO 2012/143336

(56) Entgegenhaltungen:
- EP-A1- 0 353 802
- GB-A- 1 397 658
- GB-A- 1 475 328

## Beschreibung

Die Erfindung betrifft einen Polychloropren-Feststoff, dessen Gewinnung- und Isolierungsverfahren sowie dessen Verwendung zur Herstellung von Kautschukvulkanisaten.

Die Polychloropren-Herstellung ist seit langem bekannt. Durch radikalische Emulsionspolymerisation von Chloropren (2-Chlor-1,3-butadien) werden Latices aus Polychloropren hergestellt. Derartige Latices werden im Rahmen dieser Anmeldung auch als "Polychloropren-Latices" oder "Polychloropren-Dispersionen" bezeichnet.

Bei der Herstellung werden in einem wässrigen Medium die Monomere in einem Emulgatorsystem versetzt. Dieses ist in der Regel anionischer Natur, in seltenen Fällen kommen auch nichtionische oder kationische Systeme zum Einsatz. Der Temperaturbereich, in dem die Polymerisation durchgeführt wird, umfasst Werte von ca. 0°C bis über 80°C. Somit kann die Polymerisation durch thermisch zerfallende Radikalbildner initiiert werden oder durch Redoxsysteme. In der Regel kommen auch Molekulargewichtsregler wie Mercaptane oder Xanthogendisulfide zum Einsatz. In einigen Fällen wird das Molekulargewicht des Endproduktes auch durch Copolymerisation mit Schwefel und anschließende Spaltung der dabei entstehenden sulfidischen Bindungen eingestellt. Der erwünschte Umsatz wird durch Abstoppen der Reaktion mit einem geeigneten Reagenz eingestellt.

Polychloropren-Polymerisate werden durch drei wesentlichen Kriterien charakterisiert, nämlich die Kristallisationstendenz, die Polymerviskosität und u. a. der Grad der Vorvernetzungen.

Aus dem Stand der Technik sind Polychloropren-Polymerisate bekannt, die sehr geringe, geringe, mittelstarke und besonders starke Kristallisationsneigungen aufweisen. Die mit besonders starker Kristallisationsneigung werden ausschließlich für die Anwendung im Klebstoffbereich eingesetzt. Die übrigen mit weniger starker Kristallisationsneigung finden in der Fertigung von technischen Gummiwaren, Gewebegummierungen, Kabeln, Schläuchen, Form- und Spritzartikeln und Moosgummiprofilen ihre Anwendung.

Für die Verarbeitung spielen daher die Kristallisationserscheinungen eine sehr wichtige Rolle. Als Kristallisation wird eine besonders bei niedrigen Temperaturen verstärkt auftretenden Zunahme der Härte in Abhängigkeit von der Lagerzeit verstanden. Die Verhärtung ist ein reversibler Vorgang und kann durch Erwärmen oder dynamische Beanspruchung des kristallisierten Materials beliebig oft rückgängig gemacht werden.

Die Kristallisationsneigung kann durch die Wahl der Polymerisationstemperatur während der Polymerisation eingestellt werden. Bei Polymerisationstemperaturen von kleiner als 20°C werden Polychloropren-Polymerisate mit starker Kristallisationsneigung hergestellt, die besonders für die Klebstoffanwendung geeignet sind. Bei einer Polymerisationstemperatur über 30°C werden Polychloropren-Polymerisate gewonnen, die eine geringe Kristallisationsneigung aufweisen und für Vulkanisate bzw. Gummiprodukte geeignet sind.

Des Weiteren eignet sich auch die Verwendung von Comonomeren, um die Kristallisationsneigung von Polychloropren zu beeinflussen.

In der weit überwiegenden Zahl der Fälle wird die so erhaltene Dispersion von Polychloropren in Wasser nachfolgend mittels Durchleiten von Wasserdampf entmonomerisiert. Ein Teil des dabei erhaltenen Produktes findet unmittelbar als Latex industrielle Verwendung, der größere Teil jedoch wird durch Koagulation von anhaftendem Wasser befreit und als festes Produkt seiner endgültigen Verwendung zugeführt.

Polychloropren-Feststoffe (CR-Feststoff) sowie daraus hergestellte Vulkanisate zeichnen sich bei entsprechendem Mischungsaufbau durch hohe Wetter- und Ozonbeständigkeit, durch Flammwidrigkeit, sehr gute Alterungseigenschaften, mittlere Ölbeständigkeit sowie durch beträchtliche Widerstandsfähigkeit gegen viele Chemikalien aus. Sie haben gute mechanische Eigenschaften, ein günstiges elastische Verhalten und ein hohe Verschleißfestigkeit.

Vulkanisate aus Polychloropren-Latices (CR-Latices) weisen hinsichtlich Elastizität, Zugfestigkeit, Bruchdehnung und Modul Werte auf, die denen von Naturlatex-Vulkanisaten sehr ähneln, gleichzeitig zeigen sie auch eine gute Lösungsmittel-, Chemikalien-, Öl- und Fettbeständigkeit auf.

Wie oben erwähnt, geschieht die Abtrennung des Feststoffes des Polychloroprens aus der Dispersion üblicherweise durch Koagulation. Hierzu sind eine Reihe verschiedener Verfahren bekannt. Durch Mischen der Polychloropren-Latices mit einem Koagulationsmittel wird die Emulsion aufgebrochen. Zu diesem Zweck kann jedes gewöhnliches Koagulationsmittel verwendet werden. So kann man zum Beispiel aus CR-Latices, die unter alkalischen Bedingungen hergestellt wurden, der Feststoff durch Ansäuern, beispielsweise mit einer Mineralsäure oder einer organischen Säure, koagulieren. In vielen Fällen reicht das bloße Ansäuern zur vollständigen Koagulation des Polychloroprens nicht aus, so dass man zusätzlich zur Säure noch starke Elektrolyte (Salze, die mehrwertige Kationen wie Mg²⁺, Ca²⁺ oder Al³⁺ enthalten) zusetzen muss.

Nachteilig bei dieser Methode ist die große Menge an Säure bzw. Elektrolyte, um eine vollständige Ausfällung des Feststoffes zu erreichen. Dabei verbleiben relativ große Mengen an Fällmittel im Produkt, was zu einer Verschlechterung wichtiger Produkteigenschaften führen kann. Daher wird der koagulierte Feststoff zur Entfernung des Fällmittels mit relativ großen Wassermengen gewaschen, was zu ökonomischen und ökologischen Problemen führt. Dabei fällt das Polychloropren teilweise in Form großer Klumpen aus, die in ihrem Inneren entweder noch ungefällten CR-Latex oder überschüssiges Fällmittel enthalten.

Auch ist aus dem Stand der Technik bekannt, die Koagulation durch Einwirkung höherer Temperaturen und/oder erhöhten Drücken sowie durch zusätzliche Einwirkung von Elektrolyten und Scherkräften zu ermöglichen. Ein derartiges Produkt wird einer erheblichen thermischen Belastung ausgesetzt, was zu einer Verschlechterung der Produkteigenschaften führt.

Üblicherweise wird Polychloropren aus wässrigen Dispersionen durch Ausfrieren abgetrennt. Dabei wird durch Abkühlen unter den Gefrierpunkt der wässrigen Phase der CR-Latex ausgefroren. Beim anschließenden Auftauen unter geeigneten Bedingungen liegt das Polychloropren als Koagulat vor und kann von der wässrigen Phase abgetrennt werden.

Um zu technisch ausreichend großen Koagulationsgeschwindigkeiten zu kommen, wird der CR-Latex in dünnen Schichten ausgefroren. Dazu wurden von innen kühlbare Koagulationswalzen entwickelt, die rotierend in den CR-Latex eintauchen und dabei eine dünne Latexschicht beim Rotieren mitnehmen und auf der Oberfläche ausfrieren (US-B 2,187,146). Der dünne Film aus CR-Koagulat und Eis wird mit einem Schaber von der Walze abgenommen und weitergeleitet.

Aus dem Stand der Technik sind weitere Isolierungsverfahren bekannt. US 4,103,074 beschreibt ein Verfahren zur Koagulierung eines Polymer-Latex unter Verwendung eines Schneckenextruders, wobei der Polymer-Latex während der Förderung im Schneckengang koaguliert wird.

US 3,926,877 beschreibt ein Verfahren zur Isolierung eines CR-Kautschuks, wobei der CR-Latex mit einer wässrigen Rußdispersion gemischt wird, bevor dieser mit einem Koagulierungsmittel versetzt wird. Das koagulierte Produkt wird aus der wässrigen Phase abgetrennt.

DE 30 31 088 C2 offenbart ein Verfahren zur Herstellung eines koagulierten Latex eines synthetischen Polymers, wobei ein gasförmiges oder flüssiges Koagulierungsmittel in Form eines Nebels mittels einer Spraydüse auf das Polymerlatex-Tröpfchen aufgebracht wird, so dass Polymerkügelchen ausgefällt werden.

GB 1 397 658 A beschreibt die Koagulation von Latex mit Dampf, wobei vor der Zugabe des Dampfes eine den Latex destabilisierende Substanz zugefügt werden kann. Latexdestabilisierende Substanzen sind Säuren und mehrwertige Metallsalze. Die Verwendung von Latexdestabilisierenden Substanzen enthaltendem Dampf und thixotropem Chloropren ist nicht offenbart.

EP 0 353 802 A beschreibt die Rückgewinnung von Kautschukkrümeln, die durch Emulsionspolymerisation hergestellt wurden. Bei den Monomeren für die Emulsionspolymerisation wird auch Neopren genannt. Der Latex wird im Extruder durch Zugabe von Wasser, Dampf und starker Säure koaguliert. Die Verwendung von Latexdestabilisierenden Substanzen enthaltendem Dampf und thixotropem Chloropren ist nicht offenbart.

GB 1 475 328 A beschreibt die Koagulation und Isolierung von Chloropren aus Chloroprenlatex mit Salzlösungen als Koagulationsmittel. Die Verwendung von Latexdestabilisierenden Substanzen enthaltendem Dampf und thixotropem Chloropren ist nicht offenbart.

Isolierte Polychloropren-Feststoffe werden für die Anwendung als CR-Vulkanisate zwischengelagert. Obwohl diese ausgezeichnete Langzeitalterungsbeständigkeit aufweisen, besitzen sie aber auch keine unbegrenzte Stabilität und Lagerfähigkeit. Bei der Lagerung tritt im Laufe der Zeit eine Änderung der Polymereigenschaft auf, insbesondere eine Zunahme der Fließfähigkeit, die zu einer erhebliche Beeinträchtigung der Verarbeitbarkeit führt. Diese Beeinträchtigung der Verarbeitbarkeit zeigt sich insbesondere in einer schlechteren Knet-, Streich- und Spritzbarkeit der Polychloroprene sowie in einem ungünstigeren Verhalten bei der maschinellen Verarbeitung.

Zur Vermeidung dieser Nachteile wird der Polychloropren-Feststoff mastiziert, um niedrigviskose Polychloropren-Typen als Festkautschuke zu erhalten. Die Mastizierung synthetischer Kautschuke verläuft bekanntlich nicht so leicht wie die des Naturkautschuks, insbesondere dann, wenn die Kautschuke Elektronen ziehende Substituenten, wie Zn, Cl, besitzen. Es gibt aus dem Stand der Technik Methoden zum thermooxidativen CR-Abbau. Dabei werden beispielsweise Dialkylxanthogendisulfide als Molekulargewichtsregler benutzt.

Derartig hergestellte niedrigviskose CR-Typen haben den Nachteil, dass sie sehr hohe Reglermengen aufweisen. Auch ist der thermooxidative Abbau mittels Scherbeanspruchung durch die Verwendung von Extrudern durch Molekulargewichtsabbau bekannt. Diese sog. Mastikation ist sehr zeitraubend und kann u. U. hohe Verarbeitungskosten verursachen.

Aus dem Stand der Technik gibt es zahlreiche Versuche, die Produkteigenschaften von Polychloropren zu beeinflussen. Beispielsweise wird durch Zusatz von schwefelhaltigen organischen Kettenübertragungsmitteln wie z.B. Mercaptanen das Molekulargewicht des entstandenen Polymeren gesteuert. Auch die Herstellung hochviskoser Chloropren-Polymerisate durch portionsweise Zugabe des Kettenüberträgers während der Polymerisation ist bekannt. Die Anzahl und die Höhe der Reglerzugaben sind jedoch abhängig von der Polymerisationstemperatur, dem Umwandlungsgrad und der angestrebten Polymerviskosität. Die Zusätze an Regler müssen darüber hinaus bei bestimmten Monomerumsätzen erfolgen.

Aufgabe der Erfindung ist es nun, einen Polychloropren-Feststoff bereitzustellen, welcher ein Fließverhalten aufweist, das für die Verarbeitbarkeit Vorteile bringt sowie ein Verfahren zur dessen Gewinnung und Isolierung.

Zur Lösung dieser Aufgabe wird ein Polychloropren-Feststoff auf Basis von Polychloropren-Dispersion bereitgestellt, welcher thixotrope Eigenschaften aufweist.

Unter Thixotropie versteht man im Allgemeinen eine Veränderung der Viskosität in Abhängigkeit der Zeit bei konstanter Scherung. Hervorgerufen werden diese Effekte in der Regel durch Überstrukturen, die sich während der Messdauer verändern. Im Falle der vorliegenden Erfindung wird u. a. die Eigenschaft flüssiger Stoffe, die bei gleichbleibender Temperatur durch mechanische Einwirkung/Scherung (z. B. Rühren, Schütteln oder Kneten) vorübergehend in einem Zustand niedrigerer Viskosität übergehen, beobachtet. Diese Eigenschaft hängt von der Dauer der mechanischen Einwirkung ab.

Überraschenderweise weist eine durch Scherung vorbehandelte erfindungemäße Polychloropren-Feststoff-Lösung einen Strukturabbau und zugleich im Ruhezustand einen Strukturaufbau auf. Diese Eigenschaft hat den Vorteil, dass die CR-Feststoffe sich hervorragend mischen, kneten und mit anderen Additiven verarbeiten lassen.

Bevorzugt tritt die Viskositätsänderung im Verlauf der Zeit ein. Somit können verschiedenartige CR-Typen in ihrem Verarbeitungsverhalten den Anforderungen der kautschukverarbeitenden Industrie angepasst werden.

Vorzugsweise wird die thixotrope Eigenschaft mittels der Brookfield-Viskositäts-Methode bestimmt. Zur Bestimmung der thixotropen Eigenschaft wird der erfindungsgemäße Polychloropren-Feststoff in Lösung gebracht, vorzugsweise in organische Lösungsmittel, wie beispielsweise in Benzol, Toluol, Cyclohexan. Dann wird die Polychloropren-Feststoff-Lösung einer Vorbehandlung durch Scherung mittels eines Propellerrührers unterzogen und die Viskosität gegen die Zeit gemessen.

Eine weitere Eigenschaft des erfindungsgemäßen Polychloropren-Feststoffes ist die Änderung der Schmelzviskosität nach einer Vorbehandlung auf einer Homogenisierungswalze. Vorzugsweise nimmt die Schmelzviskosität (Mooney 1+4 bei 100°C, ASTM D 1646), abhängig von der Häufigkeit der Vorbehandlung auf einer Homogenisierungswalze, ab. Es wurde auch festgestellt, dass die Schmelzviskosität nach etwa 20 Umläufen auf der Homogenisierungswalze sich nur noch langsam abbaut, was auf die Reduktion der Kettenlänge zurückzuführen ist.

Als Homogenisierungswalze wird hier eine Walze verstanden, die nicht zur Mastikation eines Kautschuks geeignet ist. Die Homogenisierungswalze unterscheidet sich von einer Mastikationswalze in ihrem geringeren spezifischen Energieeintrag. Ein hoher Energieeintrag, wie dieser bei der Mastikationswalze der Fall ist, bewirkt eine Zerstörung der Polymerkette und damit eine Erniedrigung der Schmelzviskosität.

Es wurde festgestellt, dass der erfindungsgemäße Polychloropren-Feststoff vorzugsweise aus einer Polychloropren-Dispersion gewonnen wird, die mittels einer Emulsionspolymerisation bei einer Polymerisationstemperatur von größer als 30°C, bevorzugt zwischen 35°C und 50°C, hergestellt wurde.

Des Weiteren betrifft die Erfindung ein Verfahren zur Isolierung und Gewinnung von Polychloropren-Feststoffen, wobei eine wässrige Polychloropren-Dispersion mit Koagulationsmittel enthaltendem Wasserdampf in Kontakt gebracht wird, so dass der erfindungsgemäße Polychloropren-Feststoff koaguliert.

Überraschend wurde festgestellt, dass die Produkteigenschaft des Polychloropren-Feststoffes durch das erfindungsgemäße Verfahren beeinflusst und geändert wurde, obwohl die Polychloropren-Dispersion nach herkömmlichem Verfahren hergestellt wurde.

Dabei koaguliert er vorzugsweise in Strangform oder als Krümel.

Der ausgefällte Polychloropren-Feststoff wird anschließend aus der Koagulationssuspension abgetrennt und dann vorzugsweise in einer Entwässerungsvorrichtung entwässert. Beispielsweise kann hier eine Seiher-Schnecke oder Entwässerungswalzen eingesetzt werden. Andere bekannte Entwässerungsvorrichtungen sind ebenfalls vorstellbar.

Anschließend wird der entwässerte Polychloropren-Feststoff mittels einer Trocknungsvorrichtung getrocknet. Es handelt sich bei der Trocknungsvorrichtung beispielsweise um einen Doppelwellenextruder, eine Trocknungsschnecke oder einen Trocknungskneter. Vorzugsweise können in der Trocknungsvorrichtung Additive und/oder Inerte zugesetzt werden. Somit können die Produkteigenschaften des erfindungsgemäßen Polychloropren-Feststoffes für jede Anforderung optimal beeinflusst werden. Additive zur Beeinflussung der Produkteigenschaften sind vorzugsweise zum Beispiel Stabilisatoren, Beschleuniger, Emulgatoren, Laugen, Alterungsschutzmittel, viskositätsbeeinflussende Verarbeitungshilfsmittel. Es können alle herkömmlichen Additive eingesetzt werden. Inerte sind zum Beispiel Stickstoff, Argon, Kohlenstoffdioxid, welche zur Beeinflussung der Polymerschmelzetemperaturen zugesetzt werden.

Der erfindungsgemäße Polychloropren-Feststoff wird bevorzugt mittels der Unterwassergranulierung granuliert und gekühlt.

Vorzugsweise handelt es sich bei der Polychloropren-Dispersion um einen Latex, welcher mittels der Emulsionspolymerisation hergestellt wurde. Die Polymerisation erfolgt bei größer als 30°C, bevorzugt zwischen 35°C und 50 °C, besonders bevorzugt zwischen 35°C und 45°C, Polymerisationstemperatur, wobei der Polymerisierungsumsatz zwischen 50% und 80% liegt. Überschüssiges Monomer wird mittels Vakuum-Entgasung auf einen Bereich von 1000ppm bis 1ppm entfernt. Emulsionspolymerisationsverfahren sind aus dem Stand der Technik bekannt und können hier eingesetzt werden.

Für die Polymerisation können vorzugsweise zu Chloropren (2-Chlor-1,3-Butadien) auch verschiedene Co-Monomere, wie etwa 2,3-Dichlorbutadien, zur Steuerung der Kristallisation zugesetzt werden.

Die Polychloropren-Dispersion weist vorzugsweise einen Feststoffanteil zwischen 20 - 45 Gew.-% und einen Gelanteil zwischen 0 - 10 Gew.-% auf. Der Gelanteil kann jedoch auch gezielt erhöht werden.

Vorzugsweise wird der Koagulationsmittel enthaltende Wasserdampf mittels Wasserdampf und einer wässrigen Koagulationsmittellösung gebildet. Als Koagulationsmittellösung wird bevorzugt eine wässrige Lösung eines Koagulationsmittels aus anorganischen Salzen, bevorzugt von Metallen der zweiten und dritten Hauptgruppe des Periodensystems, eingesetzt.

Als Koagulationsmittel wird bevorzugt Calciumchlorid, Magnesiumchlorid, Magnesiumsulfat, Aluminiumchlorid und/oder Aluminiumsulfat eingesetzt.

Vorzugsweise weist die Koagulationsmittellösung eine Koagulationsmittel-Konzentration zwischen 1 Gew.-% und 60 Gew.-%, bevorzugt zwischen 2 Gew.-% und 55 Gew.-%, besonders bevorzugt zwischen 10 Gew.-% und 35 Gew.-%, bezogen auf die Koagulationsmittellösung, auf.

Bevorzugt wird die Polychloropren-Dispersion vor dem Kontakt mit dem Koagulationsmittel enthaltenden Wasserdampf verdünnt.

Dabei wird die Polychloropren-Dispersion vorzugsweise auf einen Feststoffgehalt von 38 Gew.-% bis 45 Gew.-%, bevorzugt von 28 Gew.-% bis 35 Gew.-% und besonders bevorzugt von 20 Gew.-% bis 28 Gew.-%, bezogen auf die Polychloropren-Dispersion, verdünnt.

Für die Verdünnung wird bevorzugt Wasser, besonders bevorzugt demineralisiertes Wasser eingesetzt.

Die Verdünnung ist insofern wichtig, da nicht nur das Verkleben und Verstopfen der Strömungs-/Koagulationsvorrichtung verhindert bzw. reduziert wird, sondern auch eine optimale Koagulation, bedingt durch den Kontakt zwischen der CR-Dispersion und dem Koagulationsmittel enthaltenden Wasserdampf, gewährleistet werden kann.

Besonders bevorzugt werden 80 bis 1000 kg Wasserdampf pro Tonne Feststoff der Polychloropren-Dispersion, bevorzugt 80 bis 300 kg Wasserdampf pro Tonne Feststoff der Polychloropren-Dispersion, eingesetzt.

Des Weiteren werden 10 bis 40 kg Koagulationsmittel pro Tonne Feststoff der Polychloropren-Dispersion, bevorzugt 10 bis 25 kg Koagulationsmittel pro Tonne Feststoff der Polychloropren-Dispersion, eingesetzt.

Für die Koagulation wird die wässrige Polychloropren-Dispersion in einer Strömungs-/Koagulationsvorrichtung zugefügt, wobei die Strömungs-/ Koagulationsvorrichtung Aussparungen aufweist, durch die der Koagulationsmittel enthaltende Wasserdampf durchtreten kann und in der Strömungs-/Koagulationsvorrichtung auf die Polychloropren-Dispersion trifft. Dabei koaguliert der erfindungsgemäße Polychloropren-Feststoff.

Bevorzugt wird der Polychloropren-Feststoff in der Entwässerungsvorrichtung bis zu einer Restfeuchte von 10 Gew.-% bis 15 Gew.-%, bevorzugt 1,0 Gew.-% bis 9 Gew.-%, bezogen auf den Polychloropren-Feststoff, entwässert.

In der Trocknungsvorrichtung wird vorzugsweise der entwässerte Polychloropren-Feststoff bis zu einer Restfeuchte von 1 Gew.-% bis 1,5 Gew.-%, bevorzugt 0,5 Gew.-% bis t Gew.-%, besonders bevorzugt 0,1 Gew.-% bis 0,5 Gew.-%, bezogen auf den entwässerten Polychloropren-Feststoff, getrocknet.

Am Ende der Trocknungsphase in der Trocknungsvorrichtung liegt der Polychloropren-Feststoff als Kautschukschmelze vor. Die Schmelze tritt durch eine Kopfplatte und wird mit einer Schneidvorrichtung konfektioniert und in der Unterwassergranulierung durch Wasser gekühlt und transportiert.

Vorzugsweise wird dem Wasser in der Unterwassergranulierung ein Trennmittel zugesetzt. Als Trennmittel kommen hier beispielsweise Talkum, Metallstearate in Frage. Andere herkömmliche Trennmittel sind ebenfalls vorstellbar.

Eine weitere Erfindung ist die Verwendung des erfindungsgemäßen Polychloropren-Feststoffes zur Herstellung von Vulkanisaten. Ebenso Gegenstand der Erfindung sind die Vulkanisate, die den erfindungsgemäßen Polychloropren-Feststoff enthalten.

Nachstehend wird die Erfindung anhand von Beispielen und Zeichnung näher erläutert:

### Beispiele

### Herstellung einer Polychloropren-Dispersion

Die Herstellung einer Polychloropren-Dispersion erfolgt unter Einsatz der unten genannten Grundrezeptur (Angaben sind in Gew-Teilen pro 100 Gew.-Teile eingesetztes Chloropren):

| | |
|---|---|
| 125 Gew.-Teile | Wasser |
| 100 Gew.-Teile | Monomere |
| | (2-Chlor-1,3-Butadien oder eine Mischung aus 2-Chlor-1,3-Butadien und 2,3-Dichlorbutadien) |
| 3 Gew.-Teile | Natrium Salz der disproportionierten Abietinsäure |
| 0,5 Gew.-Teile | Kaliumhydroxid |
| 0,2 Gew.-Teile | n-Dodecylmerkaptan |
| 0,5 Gew.-Teile | Natrium Salz der mit Formaldehyd kondensierten Naphthalinsulfonsäure |

Die Polychloropren-Dispersion wird durch radikalische Emulsionspolymerisation zwischen 40°C und 45°C aus den vorgenannten Komponenten nach üblichen Methoden (z. B. Ullmanns Enciclopedia of Industrial Chemistry, Vol 23A, S. 252-262.) hergestellt. Die Polymerisation wird bei einem Umsatz zwischen 50% und 70% abgestoppt und die Dispersion durch Vakuum-Entgasung von Restmonomeren befreit.

### Verfahren zur Isolierung und Gewinnung eines erfindungsgemäßen Polychloropren-Feststoffes

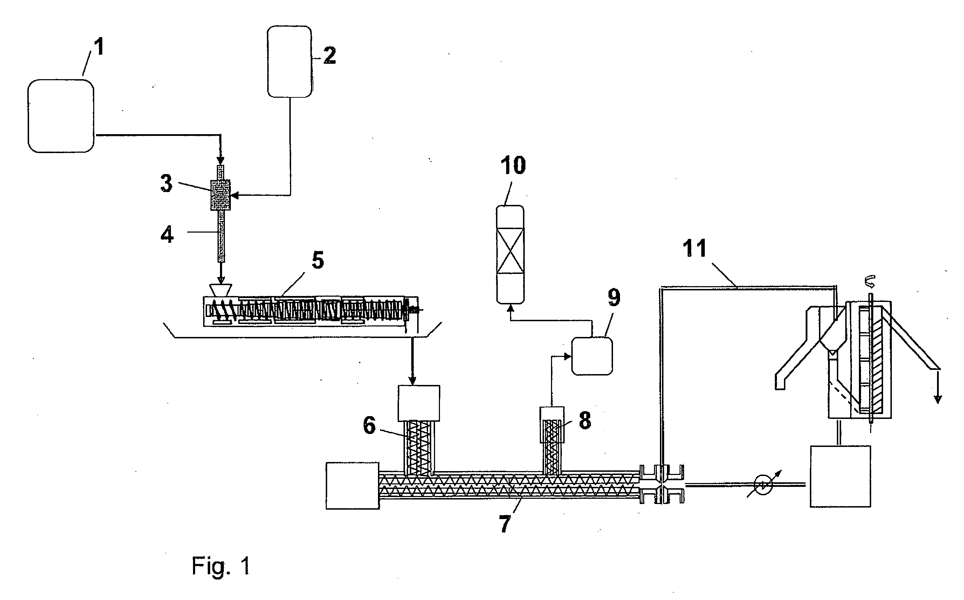

Fig. 1 zeigt einen schematischen Aufbau eines erfindungsgemäßen Verfahrens.

Die o. g. Polychloropren-Dispersion wird aus einem Tanklager 1 in eine Strömungs-/Koagulationsvorrichtung 3 gefördert. Vor Einlauf in die Strömungs-/Koagulationsvorrichtung 3 kann die Polychloropren-Dispersion mit Wasser verdünnt werden.

Aus einem weiteren Tanklager 2 wird das wässrige Koagulationsmittel, welches vorab mit Wasserdampf gemischt wurde, der Strömungs-/Koagulationsvorrichtung 3 zugeführt und über deren Aussparungen mit der Polychloropren-Dispersion in Kontakt gebracht. Hierbei wird die Polychloropren-Dispersion in der Strömungs-/Koagulationsvorrichtung 3 und im nachfolgendem Fällrohr 4 quantitativ gefällt wird.

Das Fällrohr 4 mündet in den Einzugsbereich der Entwässerungsvorrichtung 5, dabei wird der erfindungsgemäße ausgefällte Polychloropren-Feststoff entwässert.

Der entwässerte Polychloropren-Feststoff wird entweder als Strang oder als Krümel der Trocknungsvorrichtung 7 zugeführt und getrocknet. Um die Produkteigenschaften des erfindungsgemäßen Polychloropren-Feststoffes zu beeinflussen, können in der Zuführschnecke 6 oder im nachfolgenden Bereich der Trocknungsvorrichtung 7 Additive oder Inerte zudosiert werden.

Über unter Vakuum stehende Döme 8 werden die Brüden abgezogen und die Rückhaltung von Kautschukpartikeln mit Stopfschnecken in den Dömen 8 gewährleistet. Hinter den Dömen 8 befinden sich Abscheider 9, in denen mitgerissene Kautschukpartikel abgeschieden und nachfolgend einem Abluftwäscher 10 zugeführt werden.

Die heiße Kautschukschmelze aus der Trocknungsvorrichtung 7 wird in der Unterwassergranulierung über eine Kopfplatte und Schneidmesser in Chips geschnitten. Das Abkühlen und der Transport der Chips erfolgt über einen Wasserstrom 11, der wahlweise mit Additiven (z.B. Trennmittel) versetzt sein kann.

Die Chips werden zunächst über eine Siebrutsche vom Wasser getrennt. Die Restenergie der Chips verdampft das an der Oberfläche anhaftende Wasser. Ergänzend kann ein warmer Luftstrom das Entfernen des anhaftenden Wassers unterstützen.

Der so gewonnene erfindungsgemäße Polychloropren-Feststoff wird für die weiteren Eigenschaftsbestimmungen eingesetzt.

### Thixotrope Eigenschaft mittels der Brookfieldviskositäts-Methode

Für die Bestimmung der thixotropen Eigenschaft werden der erfindungsgemäße Polychloropren-Feststoffund ein Vergleichsbeispiel in Toluol gelöst.

Als Vergleichsbeispiel wird ein Polychloropren-Feststoff, welcher aus der oben genannten Polychloropren-Dispersion mittels einer herkömmlichen Gefrierkoagulation mit anschließender Trocknung im Düsenbandtrockner gewonnen wurde, eingesetzt.

Es werden jeweils 8,6 g Polychloropren-Feststoff mit 91,4 g Toluol in einem Erlenmeyerkolben eingewogen und mittels Magnetrührfisches bis zur vollständigen Löslichkeit des Polychloropren-Feststoffes bei Raumtemperatur gerührt.

Zur Einbringung von Scherung werden beide toluolische Polychloropren-Lösungen durch schnelles Rühren mit einem Propellerrührer mit 500 Umin⁻¹ für ca. 1 Minute vorbehandelt.

Die Viskositätsmessung erfolgt mittels eines RotationsViskosimeters der Marke Brookfield DV-II+ bei 60 Umin⁻¹, Spindel 2 bei 25 °C.

**Tab. 1: Viskositätsverlauf nach Scherung**

| Messdauer /min | Viskosität /mPas |
|---|---|
| 00:00 | 170 |
| 00:01 | 178 |
| 00:02 | 182 |
| 00:07 | 186 |
| 00:22 | 188 |

Der in Tabelle 1 aufgezeigte Viskositätsverlauf ergibt sich nach der oben beschriebenen Vorbehandlung mit anschließender Viskositätsmessung.

**Tab. 2: Viskositätsverlauf nach Lagerung**

| Messdauer /min | Viskosität /mPas |
|---|---|
| 00:00 | 230 |
| 00:01 | 202 |
| 00:02 | 198 |
| 00:05 | 193 |
| 00:10 | 191 |

Der in Tabelle 2 aufgezeigte Viskositätsverlauf ergibt sich nach Lagerung der in Tabelle 1 beschriebenen Polymerlösung für 30 Minuten bei 25 °C ohne Scherung.

Die mit dem erfindungsgemäßen Polychloropren-Feststoff hergestellte Polymerlösung verhält sich thixotrop. Ihre Viskosität ist scherzeitabhängig und verläuft bei konstanter Scherung asymptotisch gegen ein Gleichgewicht. Aus dem Ruhezustand sinkt demnach die Viskosität bei einer Messung bis zu einem Gleichgewicht ab. Wird in diese Lösung mittels des o. g. Propellerrührers zusätzliche Scherenergie eingebracht und sofort die Viskosität gemessen, so wird ein gegenläufiges Verhalten beobachtet, die Viskosität steigt gegen dieselbe Gleichgewichtsviskosität an.

Eine mit dem Vergleichsbeispiel hergestellte Polymerlösung zeigt dieses Verhalten nicht. Die Polymerlösung verhält sich strukturviskos, jedoch nicht thixotrop. Die Messung nach Lagerung und Vorbehandlung ergibt bei gleicher Messdauer immer einen konstanten Wert von 104 mPas.

### Schmelzviskositätsverlauf nach der Vorbehandlung auf einer Homogenisierungswalze

Für die Bestimmung wurden das o. g. erfindungsgemäße Beispiel und das o. g. Vergleichsbeispiel verglichen. Die Einbringung von Scherung erfolgt bei 25 °C in einer Laborwalze, wobei diese eine Walzenbreite von 30 cm und eine Walzenspalte von 1 mm und eine Rotation von 10 Umin⁻¹/10 Umin⁻¹ (vordere/hintere Walze) aufweist.

Es wurden jeweils ca. 200 g Polychloropren-Feststoff eingesetzt. Es wurde eine Mooney Viskosität nach ASTM D 1646 (Mooney 1+4 bei 100 °C) gemessen.

**Tabelle 3: Schmelzviskositätsverlauf**

| **Typ / Vorbehandlung** | **Erfindungsgemäßes Beispiel** | **Vergleichsbeispiel** |
|---|---|---|
| | **ML1+4/ME** | **ML1**+**4 /ME** |
| Erfindungsgemäßer Polychloropren-Feststoff 0-Wert | 56 | 51 |
| Erfindungsgemäßer Polychloropren-Feststoff 10 Umläufe in Walze | 48 | 50 |
| Erfindungsgemäßer Polychloropren-Feststoff 20 Umläufe in Walze | 46 | 51 |

Es wurde überraschend gefunden, dass der erfindungsgemäße CR-Feststoff eine Überstruktur zeigt, d.h. die Schmelzviskosität (Mooney 1+4 bei 100 °C) ist abhängig von der Vorbehandlung des Polymers. Während das Vergleichsbeispiel trotz einer Vorbehandlung eine konstante Viskosität aufweist, fällt die Viskosität bei dem erfindungsgemäßen Polychloropren-Feststoff ab. Die Abnahme erfolgt asymptotisch gegen einen Gleichgewichtswert.

### Alterungseigenschaften von Vulkanisaten

Es wurde festgestellt, dass die Alterungseigenschaften der Vulkanisate, die mit dem erfindungsgemäßen Polychloropren-Feststoff hergestellt wurden, sich verändern bzw. dass deren Verhärtung sich bei Lagerung unter normaler Atmosphäre für 7 Tage bei 100 °C vermindert.

Für die Messung der Eigenschaften wurde die nachfolgende Mischungsrezeptur verwendet:

**Tabelle 4: Mischungsrezeptur zur Herstellung der Vulkanisate**

| Ansatz-Bezeichnung: | Teile /phr |
|---|---|
| Polymer | 100 |
| Ruß N772 | 30 |
| Stearinsäure | 0,5 |
| MgO | 4 |
| ETU | 0,4 |
| ZnO | 5 |

Als Polymer werden der erfindungsgemäße Polychloropren-Feststoff und das Vergleichsbeispiel, wie oben beschrieben, eingesetzt.

Als Ruß wurde ein Cabot Ruß Regal SRF N772 verwendet.

Als Schwefelspender Ethylenthioharnstoff der Firma Rheinchemie "Rhenogran ETU-80". "phr" bedeutet parts per hundred of rubber.

Die Mischung wurde in einem *"Standard Internal Mixer"* nach ASTM D3182 erstellt. Die Vulkanisation wurde bei 160 °C für einen Zeitraum von 30 Minuten durchgeführt. Die Probenkörper wurden nach ASTM D 3182 hergestellt.

Zug-DehnungsVersuche wurden vor und nach Hitze-Alterung bei 100 °C für 7 Tage (DIN 53508) an einem S2 Zugstab (nach DIN 53504) bei Raumtemperatur durchgeführt.

Die Härte wurde nach DIN 53505 als Shore A Härte bei Raumtemperatur gemessen.

**Tabelle 5: Anfangswerte Zug-Dehnung und Härte**

| Typ und Alterungstemp. Für 7d | | Vergleichsbeispiel | Erfindungsgemäßes Beispiel |
|---|---|---|---|
| Spannungswert-S 10 | MPa | 0,5 | 0,5 |
| Spannungswert -S25 | MPa | 0,9 | 1 |
| Spannungswert -S 50 | MPa | 1,4 | 1,6 |
| Spannungswert -S 100 | MPa | 2,4 | 2,7 |
| Spannungswert -S 300 | MPa | 15,0 | 16,8 |
| Bruchdehnung | % | 370 | 377 |
| Zugfestigkeit | MPa | 20 | 23 |
| Härte | Sh A | 59 | 61 |

Wie aus Tabelle 5 ersichtlich, zeigen die Vulkanisate, hergestellt aus dem konventionell hergestellten Polychloropren-Feststoff (Vergleichsbeispiel) und aus dem erfindungsgemäßen Polychloropren-Feststoff, annähernd gleiche Vulkanisateigenschaften bei der Zug-Dehnung. Auch zeigen sie ähnliche Shore Härte.

**Tabelle 6: Vulkanisationseigenschaften nach Alterung 7 Tage bei 100 °C unter normal Atmosphäre**

| Typ und Alterungstemp. für 7d | | Vergleichsbeispiel 100 °C | Erfindungsgemäßes Beispiel 100 °C |
|---|---|---|---|
| S10 -Änderung | % | 80 | 60 |
| S25 -Änderung | % | 100 | 50 |
| S 50 -Änderung | % | 121 | 67 |
| S 100 -Änderung | % | 154 | 77 |
| S 300 -Änderung | % | | |
| Bruchdehnung Änderung | % | -48 | -37 |
| Zugfestigkeit Änderung | % | -27 | -29 |
| Härteänderung ShA | ShA | 12 | 9 |

Tabelle 6 beschreibt die Zug-Dehnungs-Eigenschaften eines bei 100 °C für 7 Tage unter normaler Atmosphäre gelagerten S2-Zugstab des Vergleichsbeispiels. Durch diverse Alterungsprozesse kommt es zu einer Verhärtung des Vulkanisatsprüfkörpers des Vergleichsbeispiels, verdeutlicht durch den Anstieg der Spannungswerte bei einer vorgegebenen Dehnung und durch den Anstieg der Shore Härte.

Eine geringere Verhärtung am Vulkanisatsprüfkörper, hergestellt mit dem erfindungsgemäßen Polychloropren-Feststoff, ist deutlich zu erkennen. Dies führt entweder zu einer höheren Dauerbetriebstemperatur des Vulkanisats oder bei gleicher Temperatur zu einer erhöhten Betriebsdauer und damit zu einer deutlichen Verbesserung des Vulkanisats.

## Patentansprüche

1. Polychloropren-Feststoff auf Basis von einer Polychloropren-Dispersion, **dadurch gekennzeichnet, dass** er thixotrope Eigenschaften aufweist.

2. Polychloropren-Feststoff nach Anspruch 1, **dadurch gekennzeichnet, dass** eine durch Scherung vorbehandelte Polychloropren-Feststoff-Lösung eine Strukturabbau und im Ruhestand eine Strukturaufbau der gleichen Polychloropren-Feststoff-Lösung aufweist.

3. Polychloropren-Feststoff nach Anspruch 2, **dadurch gekennzeichnet, dass** die thixotrope Eigenschaft (Viskositätsänderung) im Verlauf der Zeit eintritt.

4. Polychloropren-Feststoff nach Anspruch 3, **dadurch gekennzeichnet, dass** die thixotrope Eigenschaft mittels der Brookfieldviskosität-Methode bestimmt wird.

5. Polychloropren-Feststoff nach Anspruch 4, **dadurch gekennzeichnet, dass** er aus einer Polychloropren-Dispersion gewonnen wird, die mittels einer Emulsionspolymerisation bei einer Polymerisationstemperatur größer als 30°C, bevorzugt zwischen 35°C und 50°C, hergestellt wurde.

6. Polychloropren-Feststoff nach Anspruch 5, **dadurch gekennzeichnet, dass** durch die Vorbehandlung die Schmelzviskosität (Mooney 1+4 bei 100°C, ASTM D 1646) abnimmt.

7. Polychloropren-Feststoff nach Anspruch 6, **dadurch gekennzeichnet, dass** die Vorbehandlung für die Schmelzviskosität mittels einer Walze durchgeführt wird.

8. Verfahren zur Isolierung und Gewinnung von Polychloropren-Feststoffen nach einem der vorgenannten Ansprüche, **dadurch gekennzeichnet, dass** eine wässrige Polychloropren-Dispersion mit Koagulationsmittel enthaltende Wasserdampf in Kontakt gebracht wird, wobei der Polychloropren-Feststoff koaguliert.

9. Verfahren nach Anspruch 8, **dadurch gekennzeichnet, dass** der Polychloropren-Feststoff aus der Koagulationssuspension abgetrennt wird.

10. Verfahren nach Anspruch 9, **dadurch gekennzeichnet, dass** der Polychloropren-Feststoff mittels einer Entwässerungsvorrichtung entwässert wird.

11. Verfahren nach Anspruch 10, **dadurch gekennzeichnet, dass** der entwässerte Polychloropren-Feststoff mittels einer Trocknungsvorrichtung getrocknet wird.

12. Verfahren nach Anspruch 11, **dadurch gekennzeichnet, dass** dem entwässerten Polychloropren-Feststoff in der Trocknungsvorrichtung Additive und/oder Inerte zugesetzt werden.

13. Verfahren nach Anspruch 12, **dadurch gekennzeichnet, dass** der getrocknete, entwässerte, Polychloropren-Feststoff mittels der Unterwassergranulierung granuliert und gekühlt wird.

14. Verfahren nach Anspruch 13, **dadurch gekennzeichnet, dass** die Polychloropren-Dispersion ein Latex ist.

15. Verfahren nach Anspruch 14, **dadurch gekennzeichnet, dass** die Polychloropren-Dispersion mittels der Emulsionspolymerisation hergestellt wird, wobei die Polymerisationstemperatur größer als 30°C, bevorzugt zwischen 35 - 50°C, ist.

16. Verfahren nach Anspruch 15, **dadurch gekennzeichnet, dass** der Koagulationsmittel enthaltende Wasserdampf mittels Wasserdampf und einer wässrigen Koagulationsmittellösung gebildet wird.

17. Verfahren nach Anspruch 16, **dadurch gekennzeichnet, dass** als Koagulationsmittellösung eine wässrige Lösung aus anorganischen Salzen (Koagulationsmittel), bevorzugt von Metallen der zweiten und dritten Hauptgruppe des Periodensystems, eingesetzt wird.

18. Verfahren nach Anspruch 17, **dadurch gekennzeichnet, dass** als Koagulationsmittel Calciumchlorid, Magnesiumchlorid, Magnesiumsulfat, Aluminiumchlorid und/oder Aluminiumsulfat eingesetzt wird.

19. Verfahren nach Anspruch 18, **dadurch gekennzeichnet, dass** die Koagulationsmittellösung eine Koagulationsmittel-Konzentration zwischen 1 Gew.-% und 60 Gew.-%, bevorzugt zwischen 2 Gew.-% und 45 Gew.-%, besonders bevorzugt zwischen 10 Gew.-% und 35 Gew.-%, bezogen auf die Koagulationsmittellösung aufweist.

20. Verfahren nach Anspruch 19, **dadurch gekennzeichnet, dass** die Polychloropren-Dispersion vor dem Kontakt mit dem Koagulationsmittel enthaltenden Wasserdampf verdünnt wird.

21. Verfahren nach Anspruch 20, **dadurch gekennzeichnet, dass** die Polychloropren-Dispersion auf einen Feststoffgehalt von 38 Gew.-% bis 45 Gew.-%, bevorzugt von 28 Gew.-% - 35 Gew.-% und besonders bevorzugt von 20 Gew.-% - 28 Gew.-%, bezogen auf die Polychloropren-Dispersion verdünnt wird.

22. Verfahren nach Anspruch 16, **dadurch gekennzeichnet, dass** 80 kg bis 1000 kg Wasserdampf / t Feststoff der Polychloropren-Dispersion, bevorzugt 80 kg -250 kg Wasserdampf / t Feststoff der Polychloropren-Dispersion eingesetzt wird.

23. Verfahren nach Anspruch 18, **dadurch gekennzeichnet, dass** 10 bis 40 kg Koagulationsmittel / t Feststoff der Polychloropren-Dispersion, bevorzugt 10 kg - 25 kg Koagulationsmittel / t Feststoff der Polychloropren-Dispersion eingesetzt wird.

24. Verfahren nach Anspruch 23, **dadurch gekennzeichnet, dass** die wässrige Polychloropren-Dispersion eine Strömungs-/Koagulationsvorrichtung durchströmt, wobei die Strömungs-/Koagutationsvorrichtung Aussparungen aufweist, durch die der Koagulationsmittel enthaltende Wasserdampf durchtreten kann und in der Strömungs-/Koagulationsvorrichtung auf die Polychloropren-Dispersion trifft.

25. Verfahren nach Anspruch 10, **dadurch gekennzeichnet, dass** der Polychloropren-Feststoff in der Entwässerungsvorrichtung bis zu einer Restfeuchte von 10 Gew.-% bis 15 Gew.-%, bevorzugt 1,0 Gew.-% bis 9 Gew.-%, bezogen auf den Polychloropren-Feststoff entwässert wird.

26. Verfahren nach Anspruch 11, **dadurch gekennzeichnet, dass** der entwässerte Polychloropren-Feststoff in der Trocknungsvorrichtung bis zu einer Restfeuchte von 1 Gew.-% bis 1,5 Gew.-%, bevorzugt 0,5 Gew.-% bis 1 Gew.-%, besonders bevorzugt 0,1 Gew.-% bis 0,5 Gew.-%, bezogen auf den entwässerten Polychloropren-Feststoff getrocknet wird.

27. Verfahren nach Anspruch 26, **dadurch gekennzeichnet, dass** der getrocknete Polychloropren-Feststoff am Ende der Trocknungsphase in der Trocknungsvorrichtung als Kautschukschmelze vorliegt.

28. Verfahren nach Anspruch 27, **dadurch gekennzeichnet, dass** dem Wasser in der Unterwassergranulierung Trennmittel zugesetzt werden.

29. Verwendung des Polychloropren-Feststoffs nach einem der vorgenannten Ansprüche zur Herstellung von Vulkanisaten.

30. Vulkanisate nach Anspruch 29.

## Claims

1. Solid polychloroprene based on a polychloroprene dispersion, **characterized in that** it has thixotropic properties.

2. Solid polychloroprene according to Claim 1, **characterized in that** a solution of solid polychloroprene pretreated by shearing has a decrease in structural order and, at rest, an increase in structural order of the same solution of solid polychloroprene.

3. Solid polychloroprene according to Claim 2, **characterized in that** the thixotropic property (change in viscosity) occurs over the course of time.

4. Solid polychloroprene according to Claim 3, **characterized in that** the thixotropic property is determined by means of the Brookfield viscosity method.

5. Solid polychloroprene according to Claim 4, **characterized in that** it is obtained from a polychloroprene dispersion which has been produced by means of an emulsion polymerization at a polymerization temperature greater than 30°C, preferably between 35°C and 50°C.

6. Solid polychloroprene according to Claim 5, **characterized in that** the pretreatment decreases the melt viscosity (Mooney 1+4 at 100°C, ASTM D 1646).

7. Solid polychloroprene according to Claim 6, **characterized in that** the pretreatment for the melt viscosity is performed by means of a roller.

8. Process for isolating and obtaining solid polychloroprene according to any of the preceding claims, **characterized in that** an aqueous polychloroprene dispersion is contacted with water vapour comprising coagulant, which coagulates the solid polychloroprene.

9. Process according to Claim 8, **characterized in that** the solid polychloroprene is separated from the coagulation suspension.

10. Process according to Claim 9, **characterized in that** the solid polychloroprene is dewatered by means of a dewatering apparatus.

11. Process according to Claim 10, **characterized in that** the dewatered solid polychloroprene is dried by means of a drying apparatus.

12. Process according to Claim 11, **characterized in that** additives and/or inerts are added to the dewatered solid polychloroprene in the drying apparatus.

13. Process according to Claim 12, **characterized in that** the dried dewatered solid polychloroprene is pelletized by means of underwater pelletization and cooled.

14. Process according to Claim 13, **characterized in that** the polychloroprene dispersion is a latex.

15. Process according to Claim 14, **characterized in that** the polychloroprene dispersion is produced by means of emulsion polymerization, the polymerization temperature being greater than 30°C, preferably between 35 - 50°C.

16. Process according to Claim 15, **characterized in that** the water vapour comprising coagulant is formed by means of water vapour and an aqueous coagulant solution.

17. Process according to Claim 16, **characterized in that** the coagulant solution used is an aqueous solution of inorganic salts (coagulant), preferably of metals of the second and third main groups of the Periodic Table.

18. Process according to Claim 17, **characterized in that** the coagulant used is calcium chloride, magnesium chloride, magnesium sulphate, aluminium chloride and/or aluminium sulphate.

19. Process according to Claim 18, **characterized in that** the coagulant solution has a coagulant concentration between 1% by weight and 60% by weight, preferably between 2% by weight and 45% by weight, more preferably between 10% by weight and 35% by weight, based on the coagulant solution.

20. Process according to Claim 19, **characterized in that** the polychloroprene dispersion is diluted prior to contact with the water vapour comprising coagulant.

21. Process according to Claim 20, **characterized in that** the polychloroprene dispersion is diluted to a solids content of 38% by weight to 45% by weight, preferably of 28% by weight - 35% by weight and more preferably of 20% by weight - 28% by weight, based on the polychloroprene dispersion.

22. Process according to Claim 16, **characterized in that** 80 kg to 1000 kg of water vapour / t of solids of the polychloroprene dispersion, preferably 80 kg - 250 kg of water vapour / t of solids of the polychloroprene dispersion, are used.

23. Process according to Claim 18, **characterized in that** 10 to 40 kg of coagulant / t of solids of the polychloroprene dispersion, preferably 10 kg - 25 kg of coagulant / t of solids of the polychloroprene dispersion, are used.

24. Process according to Claim 23, **characterized in that** the aqueous polychloroprene dispersion flows through a flow/coagulation apparatus, said flow/coagulation apparatus having recesses through which the water vapour comprising coagulant can pass and encounters the polychloroprene dispersion in the flow/coagulation apparatus.

25. Process according to Claim 10, **characterized in that** the solid polychloroprene is dewatered in the dewatering apparatus down to a residual moisture content of 10% by weight to 15% by weight, preferably 1.0% by weight to 9% by weight, based on the solid polychloroprene.

26. Process according to Claim 11, **characterized in that** the dewatered solid polychloroprene is dried in the drying apparatus down to a residual moisture content of 1% by weight to 1.5% by weight, preferably 0.5% by weight to 1% by weight, more preferably 0.1% by weight to 0.5% by weight, based on the dewatered solid polychloroprene.

27. Process according to Claim 26, **characterized in that** the dried solid polychloroprene is present as a rubber melt at the end of the drying phase in the drying apparatus.

28. Process according to Claim 27, **characterized in that** separating agents are added to the water in the underwater pelletization.

29. Use of the solid polychloroprene according to any of the preceding claims for production of vulcanisates.

30. Vulcanisates according to Claim 29.

## Revendications

1. Solide de polychloroprène à base d'une dispersion de polychloroprène, **caractérisé en ce qu'**il présente des propriétés thixotropiques.

2. Solide de polychloroprène selon la revendication 1, **caractérisé en ce qu'**une solution de solide de polychloroprène prétraitée par cisaillement présente une dégradation de la structure et, à l'état de repos, une formation de structure de la même solution de solide de polychloroprène.

3. Solide de polychloroprène selon la revendication 2, **caractérisé en ce que** la propriété thixotropique (modification de la viscosité) intervient au fil du temps.

4. Solide de polychloroprène selon la revendication 3, **caractérisé en ce que** la propriété thixotropique est déterminée au moyen du procédé de viscosité selon Brookfield.

5. Solide de polychloroprène selon la revendication 4, **caractérisé en ce qu'**il est obtenu à partir d'une dispersion de polychloroprène qui a été préparée au moyen d'une polymérisation en émulsion à une température de polymérisation supérieure à 30°C, de préférence entre 35°C et 50°C.

6. Solide de polychloroprène selon la revendication 5, **caractérisé en ce que** la viscosité en masse fondue (Mooney 1+4 à 100°C, ASTM D 1646) diminue par le prétraitement.

7. Solide de polychloroprène selon la revendication 6, **caractérisé en ce que** le prétraitement pour la viscosité en masse fondue est réalisée au moyen d'un cylindre.

8. Procédé pour l'isolement et l'obtention de solides de polychloroprène selon au moins l'une quelconque des revendications susmentionnées, **caractérisé en ce qu'**une dispersion aqueuse de polychloroprène est mise en contact avec de la vapeur d'eau contenant un agent de coagulation, le solide de polychloroprène coagulant.

9. Procédé selon la revendication 8, **caractérisé en ce que** le solide de polychloroprène est séparé de la suspension de coagulation.

10. Procédé selon la revendication 9, **caractérisé en ce que** le solide de polychloroprène est déshydraté au moyen d'un dispositif de déshydratation.

11. Procédé selon la revendication 10, **caractérisé en ce que** le solide de polychloroprène déshydraté est séché au moyen d'un dispositif de séchage.

12. Procédé selon la revendication 11, **caractérisé en ce que** le solide de polychloroprène déshydraté est additionné d'additifs et/ou d'inertes dans le dispositif de séchage.

13. Procédé selon la revendication 12, **caractérisé en ce que** le solide de polychloroprène déshydraté, séché est granulé et refroidi au moyen d'une granulation sous eau.

14. Procédé selon la revendication 13, **caractérisé en ce que** la dispersion de polychloroprène est un latex.

15. Procédé selon la revendication 14, **caractérisé en ce que** la dispersion de polychloroprène est préparée au moyen de la polymérisation en émulsion, la température de polymérisation étant supérieure à 30°C, de préférence entre 35°C et 50°C.

16. Procédé selon la revendication 15, **caractérisé en ce que** la vapeur d'eau contenant un agent de coagulation est formée au moyen de vapeur d'eau et d'une solution aqueuse d'agent de coagulation.

17. Procédé selon la revendication 16, **caractérisé en ce qu'**on utilise, comme solution d'agent de coagulation, une solution aqueuse de sels inorganiques (agent de coagulation), de préférence de métaux du deuxième et du troisième groupe principal du système périodique.

18. Procédé selon la revendication 17, **caractérisé en ce qu'**on utilise, comme agent de coagulation, le chlorure de calcium, le chlorure de magnésium, le sulfate de magnésium, le chlorure d'aluminium et/ou le sulfate d'aluminium.

19. Procédé selon la revendication 18, **caractérisé en ce que** la solution d'agent de coagulation présente une concentration en agent de coagulation entre 1% en poids et 60% en poids, de préférence entre 2% en poids et 45% en poids, de manière particulièrement préférée entre 10% en poids et 35% en poids, par rapport à la solution d'agent de coagulation.

20. Procédé selon la revendication 19, **caractérisé en ce que** la dispersion de polychloroprène est diluée avant le contact avec la vapeur d'eau contenant l'agent de coagulation.

21. Procédé selon la revendication 20, **caractérisé en ce que** la dispersion de polychloroprène est diluée à une teneur en solides de 38% en poids à 45% en poids, de préférence de 28% en poids-35% en poids et de manière particulièrement préférée de 20% en poids-28% en poids, par rapport à la dispersion de polychloroprène.

22. Procédé selon la revendication 16, **caractérisé en ce qu'**on utilise 80 kg à 1000 kg de vapeur d'eau/t de solide de la dispersion de polychloroprène, de préférence 80 kg-250 kg de vapeur d'eau/t de solide de la dispersion de polychloroprène.

23. Procédé selon la revendication 18, **caractérisé en ce qu'**on utilise 10 kg à 40 kg d'agent de coagulation/t de solide de la dispersion de polychloroprène, de préférence 10 kg-25 kg d'agent de coagulation/t de solide de la dispersion de polychloroprène.

24. Procédé selon la revendication 23, **caractérisé en ce que** la dispersion aqueuse de polychloroprène s'écoule au travers d'un dispositif d'écoulement/coagulation, le dispositif d'écoulement/coagulation présentant des évidements que la vapeur d'eau contenant l'agent de coagulation peut traverser et ladite vapeur d'eau contenant l'agent de coagulation rencontrant la dispersion de polychloroprène dans le dispositif d'écoulement/coagulation.

25. Procédé selon la revendication 10, **caractérisé en ce que** le solide de polychloroprène est déshydraté, dans le dispositif de déshydratation, jusqu'à une humidité résiduelle de 10% en poids à 15% en poids, de préférence de 1,0% en poids à 9% en poids par rapport au solide de polychloroprène.

26. Procédé selon la revendication 11, **caractérisé en ce que** le solide de polychloroprène déshydraté est séché, dans le dispositif de séchage, jusqu'à une humidité résiduelle de 1% en poids à 1,5% en poids, de préférence de 0,5% en poids à 1% en poids, de manière particulièrement préférée de 0,1% en poids à 0,5% en poids, par rapport au solide de polychloroprène déshydraté.

27. Procédé selon la revendication 26, **caractérisé en ce que** le solide de polychloroprène séché se trouve sous forme de masse fondue de caoutchouc à la fin de la phase de séchage dans le dispositif de séchage.

28. Procédé selon la revendication 27, **caractérisé en ce qu'**un agent de démoulage est ajouté à l'eau dans la granulation sous eau.

29. Utilisation du solide de polychloroprène selon l'une quelconque des revendications précédentes pour la préparation de produits vulcanisés.

30. Produits vulcanisés selon la revendication 29.
